## Europäisches Patentamt
## European Patent Office
## Office européen des brevets

(19)

(11) Veröffentlichungsnummer: **0 213 234**
**B1**

(12)

# EUROPÄISCHE PATENTSCHRIFT

(45) Veröffentlichungstag der Patentschrift:
**15.03.89**

(51) Int. Cl.⁴: **B05B 9/03**, B05B 12/00

(21) Anmeldenummer: **85111308.4**

(22) Anmeldetag: **06.09.85**

(54) **Luftlose Spritzpistole.**

(43) Veröffentlichungstag der Anmeldung:
**11.03.87 Patentblatt 87/11**

(45) Bekanntmachung des Hinweises auf die Patenterteilung:
**15.03.89 Patentblatt 89/11**

(84) Benannte Vertragsstaaten:
**CH DE FR GB IT LI**

(56) Entgegenhaltungen:
**EP-A- 0 076 510**
**DE-A- 2 740 214**
**DE-A- 3 003 384**
**DE-A- 3 038 685**

(73) Patentinhaber: **WAGNER INTERNATIONAL AG,
Kesselbachstrasse 40, CH-9450 Altstätten/SG(CH)**
Patentinhaber: **J. Wagner GmbH,
Eisenbahnstrasse 18-24, D-7990 Friedrichshafen 1(DE)**

(72) Erfinder: **Boll, Hans-Joachim, Dipl.-Phys.,
Döllenstrasse 23, D-7778 Markdorf(DE)**

(74) Vertreter: **Münzhuber, Robert, Dipl.-Phys., Patentanwalt
Rumfordstrasse 10, D-8000 München 5(DE)**

## Beschreibung

Die Erfindung betrifft eine luftlose Spritzpistole mit einem Pumpenkolben und einer aus einer Spule und einem Schwinganker bestehenden Antriebsanordnung, die einen Eingang zum Anschluß an ein Wechselstromnetz, einen zur Schwingankerspule führenden Ausgang, eine wahlweise zuschaltbare Unterdrückungsschaltung zum Halbieren der Frequenz des Wechselstroms des Wechselstromnetzes durch periodische Unterdrückung jeder zweiten Halbwelle und Phasenanschnittkreise aufweisen. Eine solche Spritzpistole ist aus der europäischen Patentanmeldung 76 510 bekannt.

Bei Spritzpistolen mit durch einen Schwinganker angetriebenem Pumpenkolben wird im allgemeinen so vorgegangen, daß die Schwingankerspule unmittelbar am Wechselstromnetz liegt, was dazu führt, daß der Pumpenkolben 6000 Hübe/min durchführt. Durch entsprechende Auslegung der gesamten Anordnung, insbesondere Düse, Schwinganker, Pumpkolben, Rückstellfeder usw. wird erreicht, daß der Zerstäubungsgrad für einen vorgegebenen, maximalen Farbdurchsatz der Pistole sehr gut ist, d.h. die Farbe fein zerstäubt wird. Es bleibt aber auch dann noch eine zufriedenstellende Feinzerstäubung erhalten, wenn die Farbzuführung etwas gedrosselt, der Farbdurchsatz also um einen nicht zu großen Wert verringert wird. Ein Nachteil bei diesen bekannten Farbspritzpistolen ist jedoch, daß auch bei gedrosseltem Farbdurchsatz mit der hohen Kolbenfrequenz von 6000 Hüben/min gearbeitet werden muß, also bei einer Kolbenfrequenz, die zu Verschleiß und zu recht erheblichen Geräuschen führt. Es sind deshalb Farbspritzpistolen auf den Markt gekommen, bei denen die Kolbenfrequenz wahlweise – also für kleinere Farbdurchsatzmengen – von 6000 auf 3000 Hübe/min vermindert werden kann. Diese Frequenzhalbierung erfolgt dabei in der Weise, daß zwischen Netz und Schwingankerspule eine Speise- und Steuerschaltung vorgesehen ist, die im wesentlichen eine Gleichrichterschaltung darstellt, also nur die Halbwellen der einen Polarität des Wechselstroms durchläßt. Befriedigende Ergebnisse wurden jedoch dabei nicht erreicht, was darauf zurückzuführen ist, daß die gesamte Anordnung auf den Betrieb mit 6000 Hüben optimiert ist und sich deshalb bei einer Halbierung der Gesamtausstoßmenge der Farbe bei gleicher Düsengröße eine beträchtliche Verschlechterung der Zerstäubungsqualität ergibt. Außerdem kann die mit der Frequenzhalbierung verbundene Erhöhung von Spitzen- und Effektivstrom zu einer Erhitzung der Schwingankerspule führen. Um diesbezüglich eine Verbesserung herbeizuführen, ist auch bereits eine Spritzpistole auf den Markt gekommen, bei der zusammen mit der Umschaltung auf den Betrieb mit 3000 Hüben/min ein Phasenanschnitt der verbleibenden Halbwellen durchgeführt wird. Der Phasenanschnitt während des Betriebs mit 3000 Hüben/min bewirkt eine Reduzierung der Leistung des Gerätes und vermindert damit die Gefahr einer Überhitzung der Schwingankerspule. Außerdem kann durch geeignete Bemessung der Größe des Phasenanschnittes eine noch befriedigende Zerstäubungsqualität auch bei diesem Betrieb mit halbierter Frequenz erreicht werden.

Ferner ist es aus der eingangs erwähnten europäischen Patentanmeldung 76 510 bekannt, sowohl beim Betrieb mit 6000 als auch beim Betrieb mit 3000 Hüben/min einen Phasenanschnitt vorzusehen, wobei zumindest einer der beiden dazu erforderlichen Phasenanschnittkreise einen veränderbaren Widerstand aufweist, die Größe des Phasenanschnitts also verstellt werden kann. Der Grund für diese Maßnahme ist, den Grad der Zerstäubung zu verändern, und zwar für solche Fälle, bei denen eine Zerstäubung in gröbere Partikel oder gar ein sogenannter nässender Strahl wünschenswert ist, etwa beim Verspritzen von Insektiziden. Da die hydraulischen und mechanischen Elemente der Spritzpistole auf 6000 Hübe/min abgestimmt sind, kann bei Halbierung der Frequenz keine Halbierung der minimalen Förderleistung unter Beibehaltung einer befriedigenden Zerstäubungsqualität erreicht werden.

Schließlich offenbart die DE-A 2 740 214 eine alternative Unterdrückungsschaltung mit einem einstellbaren Widerstand für eine Solenoidpumpe.

Bei allen diesen bekannten Spritzpistolen ist es jedoch nicht möglich, den Farbdurchsatz unter Beibehaltung einer optimalen Zerstäubung so stark zu reduzieren, daß – wie dies bei Druckluftspritzpistolen möglich ist – auch der Ungeübte feinste Lackarbeiten durchführen kann. Aufgabe der vorliegenden Erfindung ist es deshalb, die Farbspritzpistole der eingangs erwähnten Art so zu verbessern, daß der Farbdurchsatz unter Beibehaltung einer optimalen Zerstäubung stufenweise bis in den sonst nur Druckluftspritzpistolen zugänglichen Bereich gedrosselt werden kann, d.h. eine Reduzierung der Farbdurchsatzmenge auf wenige Prozent der vollen Durchsatzmenge möglich ist. Die Lösung dieser Aufgabe ergibt sich aus den kennzeichnenden Merkmalen des Hauptanspruchs.

Die erfindungsgemäße Spritzpistole hat den großen Vorteil, daß die Bedienungsperson auf einfachste Weise eine Mehrzahl von Pumpfrequenzen wählen und damit die Ausstoßmenge nahezu beliebig reduzieren kann, und dies unter selbsttätiger Nachregelung auf den optimalen Zerstäubungsgrad. Selbst feinste Lackierarbeiten sind deshalb problemlos durchführbar. Dabei ist die erfindungsgemäße Spritzpistole trotzdem wirtschaftlich und kostengünstig herzustellen.

Weitere zweckmäßige Ausgestaltungen der Spritzpistole sind in den abhängigen Ansprüchen gekennzeichnet. Bezüglich der abhängigen Ansprüche 2 und 3 ist darauf hinzuweisen, daß die Zahl der Unterdrückungsstufen nicht mit der Zahl der hintereinander unterdrückten Halbwellen zusammenfallen muß, vielmehr beispielsweise in der ersten Unterdrückungsstufe zwei aufeinanderfolgende Halbwellen, in der zweiten Unterdrückungsstufe fünf aufeinanderfolgende Halbwellen und in der dritten Unterdrückungsstufe acht aufeinanderfolgende Halbwellen unterdrückt werden.

Die Erfindung wird nachstehend anhand der Zeichnung näher erläutert. Es zeigen:

Fig. 1 ein erstes Ausführungsbeispiel einer Schaltung zur Steuerung des Pumpenantriebs,

Fig. 2 ein zweites Ausführungsbeispiel einer Schaltung zur Pumpensteuerung,

Fig. 3 ein drittes Ausführungsbeispiel einer Schaltung für die Pumpensteuerung,

Fig. 3A eine Abwandlung der Fig. 3, und

Fig. 4 in schematischer Darstellung eine Ausführungsform der erfindungsgemäßen Spritzpistole.

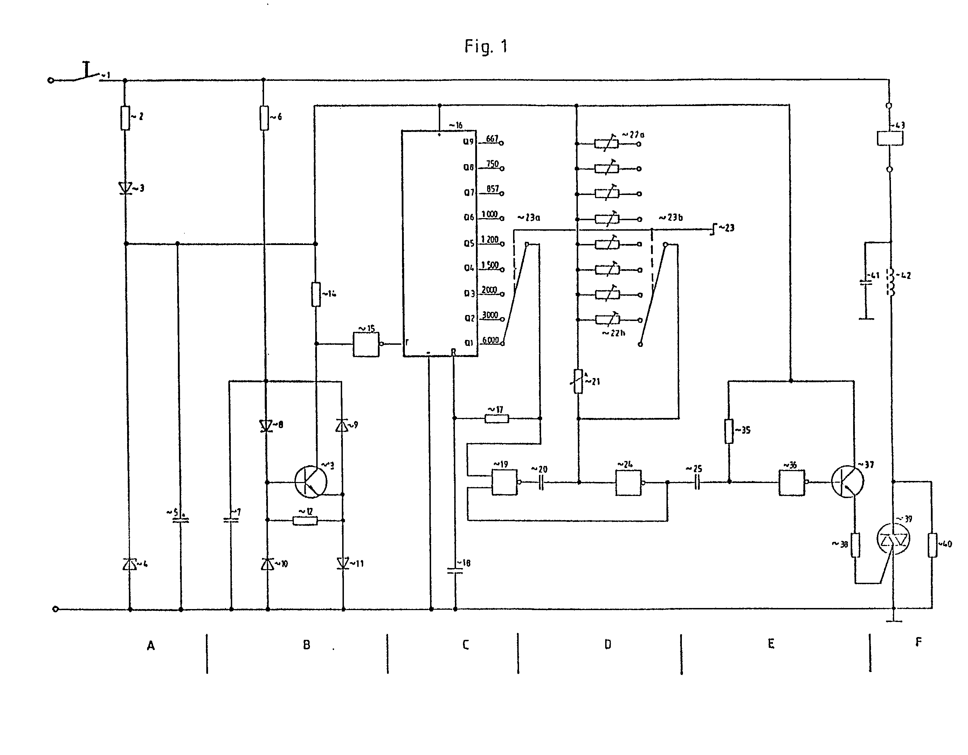

In Fig. 1 ist eine Steuerschaltung mit zweipoligem Stufenschalter für den Pumpenantrieb der Spritzpistole, also für deren Schwingankerspule, dargestellt. Dabei liegt die Steuerschaltung gemäß der Zeichnung zwischen dem Anschluß an das übliche Wechselstromnetz (220 V, 50 Hz) und einer mit 42 bezeichneten Spule, welche die von der Schaltung zu speisende und zu steuernde Spule des Schwingankers zum Antrieb des Pumpkolbens der Spritzpistole darstellen soll. Die Ein- und Ausschaltung erfolgt dabei durch den mit 1 bezeichneten Taster. Die Steuerschaltung kann – wie auf der Zeichnung angedeutet – in sechs Schaltungsteile zerlegt werden, nämlich eine Spannungsversorgung A, einen Nullspannungsschalter B, eine Zählschaltung C, eine Phasenanschnitt-Schaltung D, eine Triac-Triggerschaltung E und einen Triac-Kreis F. Die Spannungsversorgungsschaltung A besteht aus einem Widerstand 2, einer Gleichrichterdiode 3, einer Z-Diode 4 und einem Kondensator 5 und dient zur Erzeugung einer Gleichspannung von etwa 12 Volt für die Versorgung der Steuerelektronik. Der Nullspannungsschalter B besteht aus einem Widerstand 6, einem Kondensator 7, vier Dioden 8, 9, 10 und 11, einem Widerstand 12, einem Transistor 13, einem Widerstand 14 und einem Gatter 15. Dieser Nullspannungsschalter B gibt bei jedem Null-Durchgang der Netzspannung einen kurzen Impuls ab. Diese, die Nulldurchgänge der Netzspannung repräsentierenden Impulse dienen einerseits zum Synchronisieren der Schaltungselektronik mit der Netzfrequenz und zum anderen als Zählimpulse für die Zählschaltung. Die Zählschaltung besteht aus einem elektronischen Zählbaustein 16 mit Einstellschalter 23 und einem nachgeschalteten Zeitglied aus einem Widerstand 17 und einem Kondensator 18. Der vom Nullspannungsschalter B mit der erwähnten, die Netzspannungs-Nulldurchgänge repräsentierenden Impulsfolge gespeiste Zählbaustein 16 dient zur Festlegung der tatsächlichen Pumpfrequenz,also der Pumpfrequenz des durch die Spule 42 angetriebenen Pumpenkolbens. Dabei können bei dem dargestellten Ausführungsbeispiel vom Zählbaustein 16 neun Hubfrequenz-Stufen festgelegt werden, nämlich 6000 (entspricht der vollen Netzfrequenz), 3000, 2000, 1500, 1200, 1000, 857, 750 und 667 Hübe/min. Zu diesem Zweck weist der Zählbaustein 16 neun Ausgänge Q1....Q9 auf, die bei jedem vom Nullspannungsschalter B ankommenden Impuls (Taktimpuls) der Reihe nach auf Hochpotential gebracht werden. Die Ausgänge Q1....Q9 sind einzeln über den erwähnten, manuell betätigbaren Steuerschalter 23, und zwar durch dessen erste Ebene 23a, mit einem Reset-Eingang des Zählbausteins 16 verbindbar. Liegt an dem durch den Schalter 23 mit dem Reset-Eingang verbundenen Ausgang, beispielsweise dem Ausgang Q5, ein Hochpotential an, dann setzt dieses den Zähler wieder auf den Zählerstand Null, und es entsteht auf der Reset-Leitung ein kurzer positiver Spannungsimpuls, der durch das Zeitglied 17, 18 verlängert wird. Bei dem erwähnten Beispiel, daß nämlich der Schalter 23 gerade den Ausgang Q5 mit dem Reset-Eingang verbindet, bedeutet dies, daß nur jeder fünfte Nulldurchgangsimpuls des Nullspannungsschalters B zu einem Ausgangsimpuls der Zählerschaltung C führt, entsprechend einer Frequenz von 1200 Hüben/min. Durch Verdrehen des Schalters 23 können also mittels der Zählschaltung C Steuerimpulse einer der vorerwähnten neun Frequenzstufen zwischen 6000 und 667 Impulsen pro Minute erzeugt werden, wobei – was wesentlich ist –, die Impulse untereinander stets gleichen Abstand haben und jeder Impuls synchron zu einem Nulldurchgang der Netzspannung ist.

Die Ausgangsimpulse der Zählerschaltung C werden daraufhin in der Phasenanschnitt-Schaltung D einer bestimmten Zeitverzögerung unterworfen. Die Phasenanschnitt-Schaltung D stellt eine monostabile Kippstufe dar, die durch die Ausgangsimpulse der Zählerschaltung C gestartet wird und aus einem Gatter 19, einem Kondensator 20, einem Widerstand 21, einem aus acht Widerständen 22a bis 22h unterschiedlicher Größe bestehenden Widerstandsregister, der zweiten Ebene 23b des erwähnten, manuell betätigbaren Schalters 23 und einem Gatter 24 besteht. Mit der zweiten Ebene 23b des Schalters 23 wird dem Widerstand 21 je nach Schaltstellung des Schalters 23 einer der Widerstände 22a bis 22h parallelgeschaltet, mit Ausnahme derjenigen Schalterstellung, die der vollen Netzfrequenz entspricht. Anders ausgedrückt, eine Drehung des Schalters 23 bewirkt sowohl die erwähnte Verbindung eines der Ausgänge Q1...Q9 des Zählbausteins 16 mit seinem Reset-Eingang (erste Schalterebene 23a) als auch zugleich eine parallele Zuschaltung eines der Widerstände 22a...22h zum Widerstand 21 (mit Ausnahme der Schaltstellung entsprechend Q1), und zwar mit einer festen Zuordnung, derart, daß beispielsweise die Schaltstellung entsprechend dem Ausgang Q5 des Zählbausteins 16 die parallele Zuschaltung des Widerstands 22e zum Widerstand 21 zugeordnet ist. Nun stellen aber der Kondensator 20 und die Widerstände 21 sowie 22a bis 22h die Zeitkonstante des Phasenanschnitt-Schaltkreises D dar, was zur Folge hat, daß für jede Schaltstellung des Schalters 23 der Schaltkreis D die vom Schaltkreis C ankommenden Impulse um eine bestimmte, feste Zeitspanne verzögert, was, wie später noch dargelegt wird, bezüglich der Anregung der Spule 42 einen der Pumpfrequenz zugeordneten Phasenanschnitt bedeutet. Dabei ist die Zuordnung der Widerstände im Phasenanschnitt-Schaltkreis D so getroffen, daß eine Vergrößerung des Widerstandswertes einer Vergrößerung der Zeitverzögerung und damit des Phasenanschnitts bewirkt, wobei mit Verkleinerung der Frequenz der Phasenanschnitt auch verkleinert wird.

Die Ausgangsimpulse des Phasenanschnitt-Schaltkreises D werden dann dem Triac-Triggerkreis E zugeführt, dessen Aufgabe darin besteht, die Impulse so aufzubereiten, daß sie sich als Triac-Zündimpulse eignen. Dabei besteht der Triggerkreis E aus einer monostabilen Kippstufe, nämlich einem Kondensator 25, einem Widerstand 35 und einem Gatter 36, sowie einem Triac-Ansteuerkreis, nämlich einem Transistor 37 und einem Widerstand 38. Der Kondensator 25 und das Gatter 36 bestimmen die Länge der Zündimpulse.

Der Triac-Kreis F schließlich besteht aus einem Triac 39 mit parallelgeschaltetem Widerstand 40. Der Triac 39 wird vom Transistor 37 des Triggerkreises E angesteuert und stellt dasjenige Schaltungselement dar, das – bei geschlossenem Taster 1 – den Leistungsstromkreis, in welchem die Spule 42 liegt, schaltet. Die mit 41 und 43 bezeichneten Bauteile dienen lediglich zur Funkentstörung.

Stellt also die Bedienungsperson den Schalter 23 beispielsweise auf diejenige Position, in welcher der Ausgang Q5 des Zählbausteins 16 an dessen Reset-Eingang angelegt wird, dann erhält der Triac 39 Zündimpulse – ausreichender Länge und Stärke – einer Zündfrequenz von 1200 Impulsen pro Minute, wobei diese Zündimpulse gegenüber den Nulldurchgängen der Netzfrequenz um eine bestimmte, von den Widerständen 21 und 22e festgelegte Zeit nacheilen, mit der Folge, daß die Spule 42 nur von jeder fünften Halbwelle der Netzfrequenz durchflossen wird, und zwar mit einem bestimmten Anschnitt. Für das Arbeiten der Spritzpistole bzw. deren Pumpe bedeutet dies, daß die Pumpfrequenz von der vollen Netzfrequenz entsprechenden 6000 Kolbenhüben pro Minute in Stufen bis auf 667 Hübe pro Minute vermindert werden kann, mit der Folge einer Verminderung des Farbdurchsatzes von ursprünglich etwa 340 Gramm/min (bei 6000 Hüben) bis auf etwa 37 Gramm/min (bei 667 Hüben), wobei jedoch die Kraft pro Hub genügt, um bei jeder Pumpfrequenz einen ausreichenden Farbdruck und damit eine zufriedenstellende Farbzerstäubung zu gewährleisten, und wobei durch den für jede Pumpfrequenz spezifischen Phasenanschnitt die mittlere Stromaufnahme der Spule auf einen Maximalwert begrenzt (keine übermässige Erwärmung der Spule) und ein unkontrolliertes Aufschlagen des Ankers auf den Stator verhindert wird. Durch einfaches Verstellen des Schalters 23 kann somit die Bedienungsperson den Farbdurchsatz im Bereich zwischen 340 und 37 Gramm/min stufenweise verändern, ohne daß dabei nachteilige Effekte (Verschlechterung des Zerstäubungsgrades, Erhitzung des Geräts) auftreten.

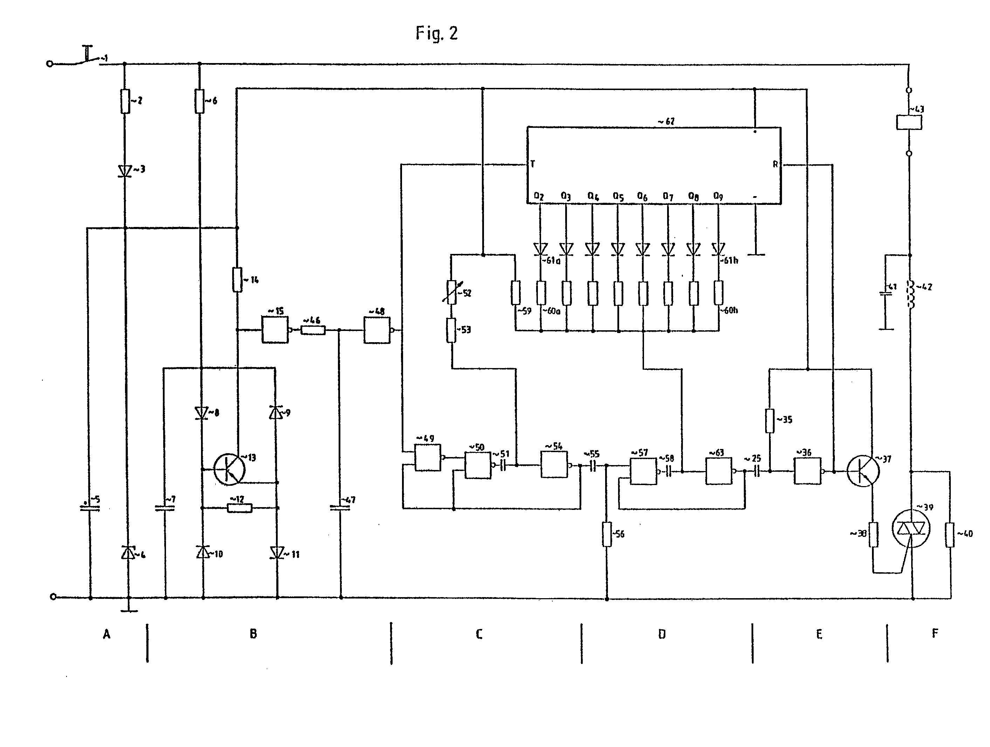

In Fig. 2 ist eine zweite Ausführungsform einer für die Erfindung brauchbaren Schaltung dargestellt. Diese Ausführungsform unterscheidet sich von derjenigen nach Fig. 1 im wesentlichen dadurch, daß die Zählschaltung C durch eine Zeitschaltung C' und die Phasenanschnitt-Schaltung D durch eine anders aufgebaute Phasenanschnitt-Schaltung D' ersetzt ist, wohingegen die Spannungsversorgungs-Schaltung A, der Nullspannungsschalter B, die Triac-Triggerschaltung E und die Triac-Schaltung F im wesentlichen beibehalten sind.

Bei der Schaltung nach Fig. 2 werden die Ausgangssignale des Nullspannungsschalters B, also die Ausgangssignale des Gatters 15 nach Filterung durch ein RC-Glied aus Widerstand 46 und Kondensator 47 über ein Gatter 48 dem Zeitschaltkreis C' zugeführt, der hier als monostabile Kippstufe ausgebildet ist und aus den Gattern 49 und 50, dem Kondensator 51, dem Potentiometer 52, dem festen Widerstand 53 und dem Gatter 54 besteht. Damit weist dieser Zeitschaltkreis C' eine durch das manuell verstellbare Potentiometer 52 veränderbare bzw. einstellbare Ablaufzeit auf, während deren Dauer die vom Gatter 48 zugeführten Nullspannungsimpulse vom Gatter 50 nicht weitergegeben werden. Erst wenn diese Ablaufzeit abgelaufen ist, wird der nächstfolgende Nullspannungsimpuls vom Gatter 50 zum Phasenanschnitt-Schaltkreis D' weitergeleitet. Wird also beispielsweise durch das Potentiometer 52 eine Ablaufzeit vorgegeben, die nach der Ankunft des vierten aber vor Ankunft des fünften Nullspannungsimpulses abläuft, dann werden die ersten vier Nullspannungsimpulse unterdrückt und erst der fünfte Nullspannungsimpuls durchgelassen, wobei sich dieser Vorgang entsprechend wiederholt, weil dieser fünfte Nullspannungsimpuls zugleich die Ablaufzeit wieder startet. Die manuelle Verstellung des Potentiometers 52 führt somit bezüglich der Frequenzreduzierung zum gleichen Ergebnis wie die Verstellung des Schalters 23 (erste Schaltebene 23a) der Schaltung von Fig. 1.

Die Ausgangsimpulse der Zeitschaltung C' werden nach Differenzierung durch den Kondensator 55 und den Widerstand 56 dem Phasenanschnitt-Schaltkreis D' zugeführt, der ebenfalls als monostabile Kippstufe ausgeführt ist und aus dem Gatter 57, dem Kondensator 58, dem Widerstand 59, dem Widerstandsregister 60a bis 60h mit zugeordneten Gleichrichterdioden 61a bis 61h, einem Zählbaustein 62 und einem Gatter 63 besteht. Die Schaltung D' bewirkt eine zeitliche Verzögerung der sie erreichenden Nullspannungsimpulse und damit – wie aus der Erläuterung des Ausführungsbeispiels von Fig. 1 verständlich ist – im Leistungsstromkreis der Spule 42 einen Phasenanschnitt, wobei die Länge der Nacheilung und damit die Größe des Phasenanschnitts sich aus der jeweiligen Zeitkonstante ergibt, welche durch die Bauteile 58, 59 und 60a bis 60h festgelegt wird, ähnlich wie im Fall der Bauteile 20, 21 und 22a bis 22h der Schaltung von Fig. 1; eine Vergrößerung des Widerstandswertes (60a bis 60h) bewirkt dabei ebenfalls eine Vergrößerung des Phasenanschnitts.

Abweichend von der Schaltung nach Fig. 1, bei welcher der bipolare Schalter 23 jeder Frequenzreduzierungsstufe eine bestimmte Phasenanschnittsgröße zuordnet, ist bei der Schaltung nach Fig. 2 keine mechanische Kopplung zwischen dem manuell betätigbaren Stellknopf des Potentiometers 52 und der Phasenanschnitt-Schaltung D' vorgesehen, so daß also die Schaltung D' auf elektronischem Wege selbsttätig feststellen muß, welche Frequenzreduzierungsstufe von der Schaltung C' festgelegt worden ist, um so jeder Frequenzstufe die zugehörige Phasenanschnittsgröße zuordnen zu können. Zu diesem Zweck ist der Zählbaustein 62 vorgesehen, dessen Eingang direkt mit dem Ausgang des Ausgangsgatters 48 des Nullspannungsschalters B verbunden ist, so daß also der Zählerbaustein 62 jedes Nulldurchgangssignal der Netzspannung empfängt. Bei jedem Nulldurchgangssignal zählt der Zählerbaustein 62 einen Takt weiter, d.h., seine Ausgänge Q2–Q9 liegen der Reihe nach an Hochpotential. Damit wird jedem Ausgangsimpuls der Frequenzreduzierungsschaltung C' die richtige Widerstandskombination aus dem Widerstand 59 und einem der Widerstände 60a–60h zugeteilt, d.h. die dann die Größe des Phasenanschnitts bestimmende Verzögerungszeit (gegenüber dem Nulldurchgang der Netzspannung) zugeordnet. Die Rückstellung des Zählbausteins 62 erfolgt nach jedem dem Triac 39 aufgeprägten Zündimpuls, zu welchem Zweck der Reset-Eingang des Zählbausteins 62 mit der Triac-Triggerschaltung E verbunden ist. Der jeder Frequenzreduzierungsstufe zuzuordnende Phasenanschnitt bestimmter Größe wird also auf ähnliche Weise bewirkt wie im Fall der Schaltung von Fig. 1, lediglich daß der in der Phasenanschnitt-Schaltung D' verwendete Zählbaustein 62 durch Abzählen der Nullspannungsdurchgänge der Netzfrequenz eine automatische Zuordnung des entsprechenden Zeitglieds vornimmt, eine mechanische Kopplung also mit dem Schalter für die Einstellung der Frequenzreduzierungsstufe nicht erforderlich ist.

Im übrigen entspricht die Schaltung nach Fig. 2, wie bereits vorab erwähnt, derjenigen von Fig. 1, was durch die Verwendung gleicher Bezugszeichen für gleiche Bauelemente zum Ausdruck gebracht ist.

Als Zählbaustein 16 für die Schaltung von Fig. 1 und als Zählbaustein 62 für die Schaltung nach Fig. 2 werden zweckmäßigerweise integrierte Schaltkreise verwendet, wobei auf dem Markt IC-Bausteine erhältlich sind, die für diesen Zweck verwendbar sind. Selbstverständlich ist es auch möglich, die Schaltungen nach den Fig. 1 und 2 zu kombinieren d.h. in der Schaltung von Fig. 1 die Phasenanschnittschaltung D durch die Schaltung D' von Fig. 2 zu ersetzen oder in der Schaltung nach Fig. 2 die Frequenzreduzierungsschaltung C' durch die Schaltung C von Fig. 1. Im ersteren Fall werden dann zwei Zählbausteine 16 und 62 verwendet, wohingegen im zweiten Fall ohne Zählbausteine auszukommen ist, Frequenzreduzierungsschaltung und Phasenanschnittschaltung vielmehr durch einen bipolaren Schalter gemeinsam geschaltet werden.

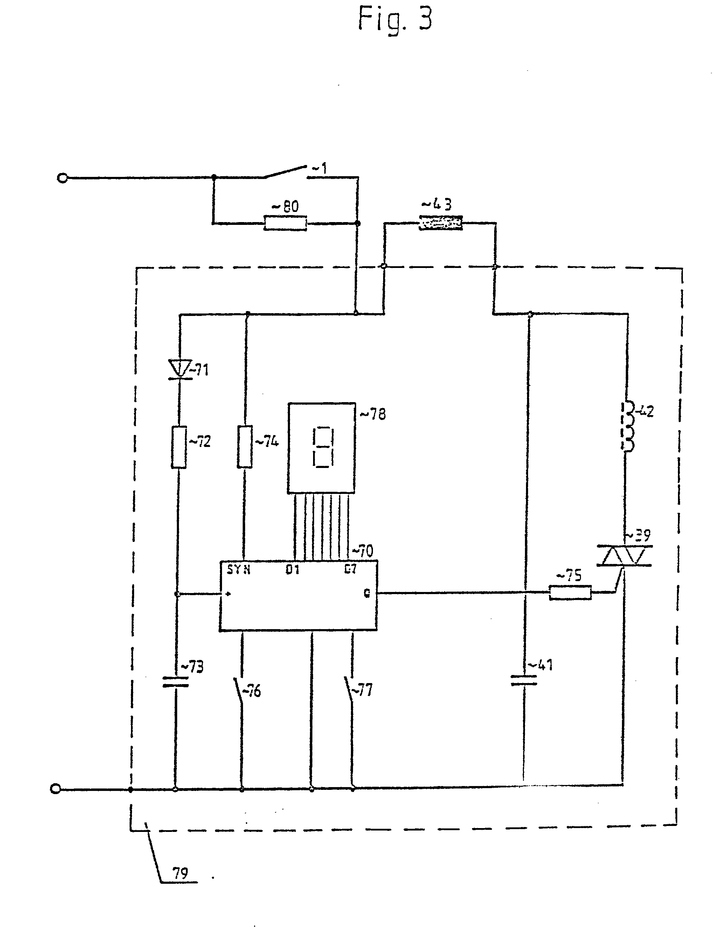

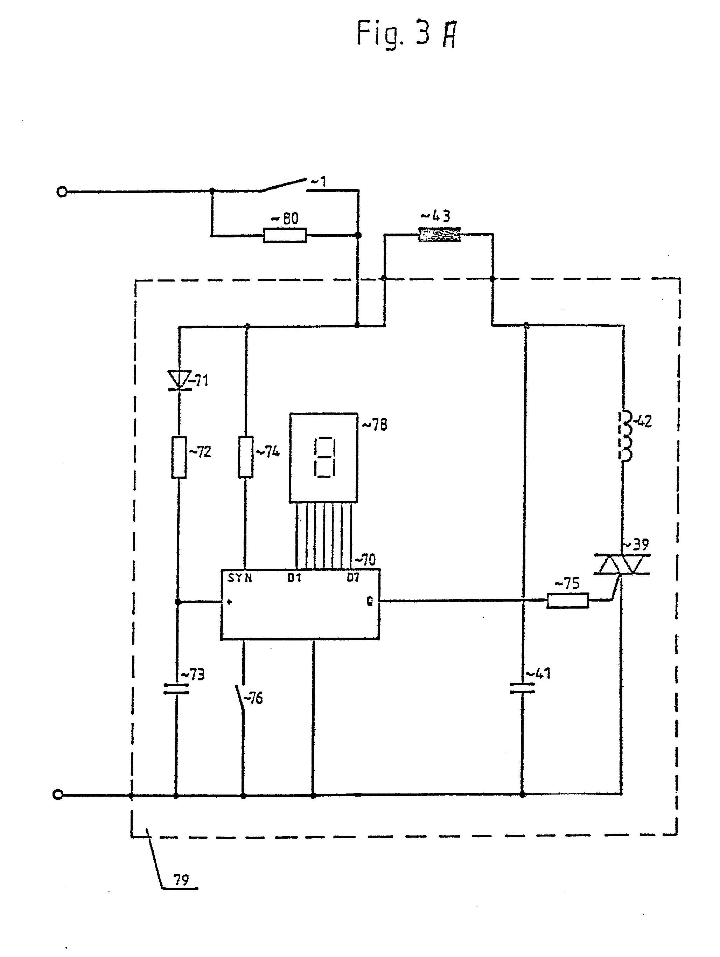

Eine weitere Ausführungsform der Schaltung nach der Erfindung ist in Fig. 3 dargestellt. Diese Schaltung unterscheidet sich von den beiden vorerwähnten Schaltungen dadurch, daß ein Sonder-Baustein 70 verwendet wird, nämlich ein IC-Baustein, der als Sonderanfertigung so ausgelegt ist, daß er im wesentlichen alle Funktionen der Schaltung nach Fig. 1 bzw. nach Fig. 2 erfüllt. Mit anderen Worten, der IC-Baustein 70 beinhaltet funktionsmäßig den Nullspannungsschalter B, die Frequenzreduzierungsstufe C bzw. C', die Phasenanschnittschaltung D bzw. D' und die Triac-Triggerschaltung E. Dabei arbeitet der IC-Baustein 70 vorzugsweise rein digital, d.h., alle monostabilen Kippstufen der Schaltungen nach den Fig. 1 und 2 sind durch Zählschaltungen ersetzt.

Die Diode 71, der Widerstand 72 und der Kondensator 73 dienen zur Erzeugung der Versorgungsspannung des Bausteins 70, der über einen Widerstand 74 von der Netzspannung ein Synchronisiersignal erhält. Im zum Triac 39 führenden Ausgang des Bausteins 70 liegt ein Widerstand 75, der den maximalen Zündstrom begrenzt. Als Bedienungselement zur Veränderung der Pumpfrequenz dienen zwei Taster 76 und 77, wobei die Betätigung des einen Tasters eine Erhöhung, die Betätigung des anderen Tasters eine Erniedrigung der Pumpfrequenz um jeweils eine Frequenzstufe erbringt. In den IC-Baustein 70 ist außerdem eine zusätzliche Logik integriert, was ohne nennenswerte Mehrkosten möglich ist, die eine an den Baustein 70 angeschlossene LCD-Anzeige 78 steuert. Diese Anzeige macht sichtbar, welche Pumpfrequenz gerade gewählt ist.

In den IC-Baustein kann weiterhin ohne nennenswerten Aufwand eine PLL-Schaltung (Phase locked loop) eingebunden werden, welche automatisch die Phasenanschnitte an die anliegende Netzfrequenz anpaßt. Der Einfangbereich der PLL-Schaltung kann z.B. 45–65 Hz betragen.

Wird der IC-Baustein in CMOS-Technologie aufgebaut und eine LCD-Anzeige verwendet, kann das im ganzen mit 79 bezeichnete Elektronik-Modul aufgrund des niedrigen Stromverbrauches für einen weiten Spannungsbereich z.B. 100 bis 240 V ohne Änderung eingesetzt werden.

Fig. 3A zeigt eine Abwandlung der Schaltung nach Fig. 3. Der IC-Baustein ist hier so geschaltet, daß mit Anlegen der Netzspannung automatisch eine bestimmte Pumpfrequenz – vorzugsweise die höchste – eingeschaltet ist, zu welchem Zweck der Taster 1 durch einen Hochohmwiderstand 80 überbrückt ist. Durch Betätigung des Tasters 76 wird bei jeder Betätigung die jeweils nächstniedrige Pumpfrequenz eingeschaltet. Nach erreichter niedrigster Pumpfrequenz wird, bei erneuter Betätigung des Tasters 76, wieder auf die vorher bestimmte Pumpfrequenz geschaltet. Die wählbaren Pumpfrequenzen sind bei dieser Ausführung nicht erhöhend oder erniedrigend schaltbar, sondern umlaufend.

Die Funktionsweise der Schaltungen nach Fig. 3 und Fig. 3A bedarf nach der ausführlichen Beschreibung der Schaltungen der Fig. 1 und 2 keiner weiteren Erläuterung. Der große Vorteil der Schaltungen nach Fig. 3 und 3A besteht darin, daß sie bei hohen Stückzahlen sehr kostengünstig sind und zu einer Reduzierung der Baugröße führen, insbesondere wenn die gesamte Schaltung in "Chip-on-Bord"-Technologie, zusammen mit SMD-Bauteilen aufgebaut ist.

Die Schaltung kann gegenüber den erläuterten drei Ausführungsbeispielen zahlreiche Abwandlungen erfahren, insbesondere auch was die Zahl der Frequenzreduzierungsstufen angeht. Theoretisch ist es möglich, z.B. die Reduzierung bis zur Hubfrequenz 1, also einem Hub pro Minute, zu treiben, jedoch wird dies nur in Ausnahmefällen sinnvoll sein. Andererseits sollten zumindest vier Reduzierungsstufen, beispielsweise entsprechend 3000, 1500, 1000 und 667 Hüben pro Minute, vorgesehen werden, und zwar ausgehend von den 6000 Hüben der vollen Netzfrequenz. In der Praxis dürfte es besonders zweckmäßig sein, 8–12 Halbwellen zu unterdrücken, wobei man damit allein mit der Frequenzreduzierung auf Farbdurchsätze von etwa 20–40 g/min kommt, ausgehend von einem Farbdurchsatz von 340 g/min bei den vollen 6000 Hüben. Zusätzlich aber kann mit Hilfe einer mechanischen Mengensteuerung sowohl eine besondere Feinstadaption der mechanisch-hydraulischen Bauteile an die elektronisch gewählte und bestimmte Hubfrequenz vorgenommen als auch eine noch weitere Verminderung des Farbdurchsatzes bei vorgegebener Zahl von Frequenzreduzierungsstufen erreicht werden. Bei reduzierter Pumpfrequenz wird infolge des ansteigenden Spitzenstroms mit einer erhöhten Kraft pro Pumphub gearbeitet, mit der Folge, daß gerade bei niedrigen Pumpfrequenzen ein ausgezeichneter Zerstäubungsgrad erreicht und dieser auch dann noch zufriedenstellend ist, wenn man die Farbmenge auf mechanischem Wege heruntersetzt. Auf diese Weise wird es dann möglich, bei der 10.–12. Reduzierungsstufe und zusätzlicher mechanischer Mengensteuerung auf Farbdurchsätze zwischen 10 und 20 g/min zu kommen, womit man sich dann in Bereichen bewegt, die bisher nur mit Druckluft-Farbspritzpistolen erreichbar waren. Damit aber wird es möglich, daß auch mit dem luftlosen Zerstäuberverfahren eine so geringe Ausstoßmenge gefördert wird, daß auch von einem Ungeübten feinste Lackierarbeiten durchführbar sind.

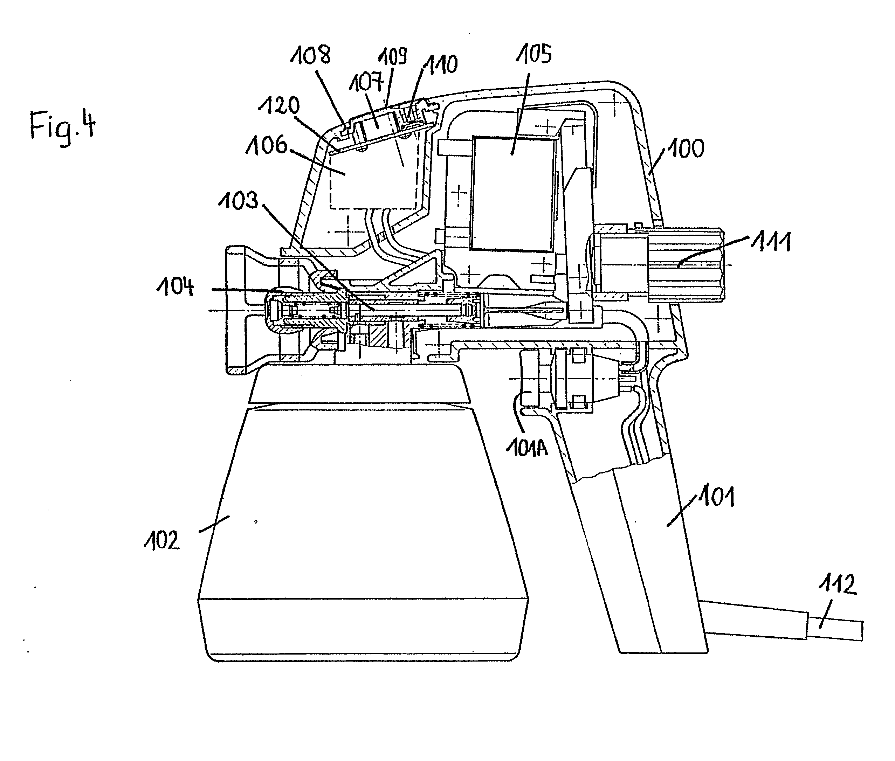

Fig. 4 schließlich zeigt schematisch die erfindungsgemäße Spritzpistole, und zwar in teilweise aufgebrochener Seitenansicht. Dabei sind mit 100 das Pistolengehäuse und mit 101 ein von diesem abgehender Handgriff mit Ein-Ausschalter 101A bezeichnet. An der Unterseite des Pistolengehäuses 100 ist ein Vorratsbehälter 102 für das Spritzmedium befestigt, wobei das Spritzmedium durch die im Pistolengehäuse angeordnete Pumpe 103 hochgesaugt und zu einer Spritzdüse 104 gefördert wird. Der Antrieb der Pumpe 103 erfolgt durch einen elektrischen Schwingankerantrieb 105, dessen Lage im Pistolengehäuse 100 dargestellt ist. Über der Pumpe 103 befindet sich im Pistolengehäuse die elektronische Steuerschaltung 106 für den Pumpenantrieb 105, wobei die vorab erläuterten Schaltungen nach den Fig. 1, 2, 3 und 3A Beispiele für diese Steuerschaltung 106 sind. Über der Steuerschaltung 106 befindet sich ein Anzeigeelement 107, das in einem Rahmen 108 gefaßt und durch eine durchsichtige Folie 109 abgedeckt, flüssigkeitsdicht in das Pistolengehäuse, vorzugsweise zwei Gehäusehalbschalen, eingesetzt ist. Mit 110 ist ein Taster für die Einstellung der Steuerschaltung 106 bezeichnet, der dem Taster 76 von Fig. 3A entspricht, während das Bezugszeichen 111 eine Verstelleinrichtung zur mechanischen Veränderung des Ausstoßes der Farbmenge ist. Ein elektrisches Kabel 112 mit nicht dargestelltem Stecker dient zum Anschluß der Pistole an das übliche Stromnetz.

Die Anordnung der Steuerschaltung 106 und der Anzeige 107 oberhalb der Pumpe 103 und die Anordnung des sehr viel schwereren elektrischen Antriebs 105 oberhalb des Handgriffs 101 erbringen eine optimale Ergonomie beim Umgang mit der Spritzpistole und eine optimale Gewichtsverlagerung in die Hand der Bedienungsperson. Die Fassung der Anzeige 107 im Rahmen 108 und die Abdeckung mittels der durchsichtigen Kunststoffolie 109 dienen zum Schutz der Anzeige 107 und des darunter befindlichen Elektronik-Bausteins 106 gegen die Einwirkung von Farbtröpfchen bzw. -dämpfen und deren Lösemitteln. Dabei kann die Anzeige 107 durch LCD-Elemente oder Leuchtdioden oder dergleichen gebildet sein.

Die Bedienungsperson stellt die gewünschte Frequenzstufe mittels des Tasters 110 ein, wobei beispielsweise ein Druck auf die Taste 110 eine Erniedrigung der Frequenz um eine Stufe bewirkt. Die gewählte Frequenz wird dem Benutzer auf der Anzeige 107 angezeigt, so daß er stets weiß, welche Betriebsfrequenz gerade eingestellt ist. Die Anzeige 107 ist dabei in dem Augenblick eingeschaltet, wenn das Netzkabel 112 gesteckt worden ist, obwohl die Betätigungstaste 101a, die den Pumpenantrieb 105 einschaltet, noch nicht betätigt worden ist. Dies wird dadurch erreicht, daß mit Hilfe eines hochohmigen Widerstandes ständig Spannung an der Schwingankerspule und damit gleichzeitig an der elektronischen Steuerschaltung 106 anliegt, die anliegende Leistung jedoch lediglich so hoch ist, daß sie eben ausreicht, die Steuerelektronik 106 und die Anzeige 107 arbeitsfähig zu machen, jedoch nicht den Antrieb in Tätigkeit zu setzen. Eine zusätzliche Änderung des Farbdurchsatzes kann durch Verdrehen der mechanisch die Farbausstoßmenge ändernden Verstelleinrichtung 111 erfolgen, an welcher vorzugsweise Maximum-Minimum-Markierungen angebracht sind. Selbstverständlich ist es auch möglich, am Drehknopf der Verstelleinrichtung 111 elektrische Kontakte anzubringen, die mit der elektronischen Steuereinheit 106 verbunden sind, so daß diese über die Anzeige 107 zusätzlich zur jeweiligen Frequenzstufe auch die Stellung des Drehknopfs 111 anzeigt. Die Baueinheit 106, die Anzeige 107 und der Taster 110 sind an einer Platine 120 angeordnet, die im Rahmen 108 befestigt ist, der mit der Folie 109 flüssigkeitsdicht und auswechselbar in das Gehäuse 100 eingesetzt ist.

**Patentansprüche**

1. Luftlose Spritzpistole mit einem Pumpenkolben und einer aus einer Spule und einem Schwinganker bestehenden Antriebsanordnung, die einen Eingang zum Anschluß an ein Wechselstromnetz, einen zur Schwingankerspule führenden Ausgang, eine wahlweise zuschaltbare Unterdrückungsschaltung zum Halbieren der Frequenz des Wechselstroms des Wechselstromnetzes durch periodische Unterdrückung jeder zweiten Halbwelle und Phasenanschnittkreise aufweist, dadurch gekennzeichnet, daß die Unterdrückungsschaltung (C; C'; 70) Zähl- oder Zeitkreise aufweist zum periodischen Unterdrücken einer beliebig wählbaren ganzen Zahl von aufeinanderfolgenden Halbwellen des Wechselstromes, so daß bei der gewählten Unterdrückungsstufe nur jede zweite, dritte, vierte, ... n-te Halbwelle, und zwar in Größe und Dauer unverändert, aufrechterhalten bleibt, und daß eine der Zahl vorhandener Unterdrückungsstufen entsprechende Anzahl von Phasenanschnittkreisen (D; D'; 70) vorgesehen ist, deren jeder einen Phasenanschnitt bestimmter Größe bewirkt und einer der Unterdrückungsstufen fest zugeordnet ist.

2. Spritzpistole nach Anspruch 1, dadurch gekennzeichnet, daß bis zu 12 aufeinanderfolgende Halbwellen des Wechselstroms unterdrückbar sind.

3. Spritzpistole nach Anspruch 1 oder 2, dadurch gekennzeichnet, daß 4-8 Unterdrückungsstufen vorgesehen sind.

4. Spritzpistole nach einem der Ansprüche 1-3, dadurch gekennzeichnet, daß die Unterdrückungsschaltung eine Zählschaltung (C) mit elektronischem, eine Mehrzahl von Ausgängen (Q1...Q9) aufweisendem Zählbaustein (16) ist und die Phasenanschnittkreise (D) ein aus festen Widerständen (21, 22a...22h) bestehendes Register aufweisen, wobei der Zählbaustein (16) und das Widerstandsregister (21, 22) gemeinsam durch einen bipolaren Schalter (23) einstellbar sind.

5. Spritzpistole nach einem der Ansprüche 1-3, dadurch gekennzeichnet, daß die Unterdrückungsschaltung eine Zeitschaltung (C') mit einstellbarem Potentiometer (52) ist und daß die Phasenanschnittkreise (D') aus einem elektronischen Zählbaustein (62) und einem Widerstandsregister (59, 60a...60h) bestehen, wobei der Zählbaustein (62) eine automatische Widerstandszuordnung zu der am Potentiometer (52) eingestellten Unterdrückungsstufe vornimmt.

6. Spritzpistole nach einem der Ansprüche 1-3, dadurch gekennzeichnet, daß die Unterdrückungsschaltung eine Zeitschaltung (C') mit einstellbarem Potentiometer ist und daß das Potentiometer aus einem Stufenschalter mit festen Widerständen besteht und die zweite Ebene des Schalters zur Einstellung des Phasenanschnittes dient.

7. Spritzpistole nach einem der Ansprüche 1-3, dadurch gekennzeichnet, daß die Unterdrückungsschaltung eine Zählschaltung (C) ist und daß die Phasenanschnittkreise (D') aus einem elektronischen Zählbaustein (62) und einem Widerstandsregister (59, 60a...60h) bestehen.

8. Spritzpistole nach Anspruch 7, dadurch gekennzeichnet, daß für die Unterdrückungsschaltung (C) und die Phasenanschnittkreise (D') derselbe Zählbaustein verwendet ist.

9. Spritzpistole nach einem der Ansprüche 4-8, dadurch gekennzeichnet, daß als Zählbaustein (16; 62) ein handelsüblicher IC-Baustein verwendet ist.

10. Spritzpistole nach einem der Ansprüche 1-3, dadurch gekennzeichnet, daß die Unterdrückungsschaltung und die Phasenanschnittkreise in einem einzigen, speziellen IC-Baustein (70) integriert sind.

11. Spritzpistole nach Anspruch 10, dadurch gekennzeichnet, daß der IC-Baustein (70) durch einen die Unterdrückungsstufe erhöhenden und einen die Unterdrückungsstufe erniedrigenden Taster (76, 77) schaltbar ist.

12. Spritzpistole nach Anspruch 6, dadurch gekennzeichnet, daß der IC-Baustein (70) durch einen die Unterdrückungsstufen umlaufend erniedrigenden und erhöhenden Taster (76) schaltbar ist, derart, daß jeweils von einer höheren Unterdrückungsstufe auf die nächst niedrige Stufe und von der niedrigsten Stufe auf die höchste Stufe geschaltet wird.

13. Spritzpistole nach Anspruch 11 und 12, gekennzeichnet durch eine die eingestellte Unterdrückungsstufe anzeigende, an den IC-Baustein (70) angeschlossene Anzeigevorrichtung (78), vorzugsweise LCD-Anzeigevorrichtung.

14. Spritzpistole nach einem der Ansprüche 4-13 mit Netztaster, dadurch gekennzeichnet, daß dem Netztaster (1) ein hochohmiger Widerstand (80) parallel geschaltet ist.

15. Spritzpistole nach Anspruch 14, dadurch gekennzeichnet, daß die Unterdrückungsstufen auch bei noch nicht gedrücktem Netztaster (1) vorwählbar und anzeigbar sind.

16. Spritzpistole nach einem der Ansprüche 10-15, dadurch gekennzeichnet, daß der IC-Baustein (70) mit einer automatischen Frequenznachführungsschaltung versehen ist.

17. Spritzpistole nach einem der Ansprüche 10-16, dadurch gekennzeichnet, daß der IC-Baustein (70) hochohmig in CMOS-Technologie aufgebaut ist.

18. Spritzpistole nach einem der Ansprüche 1-17, gekennzeichnet durch eine Verstelleinrichtung (111) zur Feinabstimmung der hydraulischen und mechanischen Elemente auf die jeweilig gewählte Unterdrückungsstufe und zur zusätzlichen mechanischen Mengensteuerung des Spritzmedium-Ausstoßes.

19. Spritzpistole nach einem der Ansprüche 1-18, dadurch gekennzeichnet, daß die elektrischen bzw. elektronischen Schaltkreise bzw. Bausteine als Baueinheit (106) und die Anzeige (107) über der Kolbenpumpe (103) angeordnet sind und die Anzeige (107) durch eine durchsichtige Folie (109) abgedeckt ist.

20. Spritzpistole nach Anspruch 19, dadurch gekennzeichnet, daß die elektrische bzw. elektronische Baueinheit (106), die Anzeige (107) und der Schalter (23) bzw. Taster (76) an oder auf einer Platine (120) angeordnet sind, die in einem Rahmen (108) befestigt ist, wobei der Rahmen (108) mit der Folie (109) flüssigkeitsdicht und auswechselbar in das Pistolengehäuse (100) eingesetzt ist.

**Claims**

1. Airless spray gun with a pump piston and a drive arrangement consisting of a coil and an oscillating armature which has an input to the connection to an alternating current supply, an output leading to the oscillating armature coil, a suppression circuit which may optionally be switched in to halve the frequency of the alternating current supply by periodic suppression of every second half wave and which has phase angle circuits, characterised in that the suppression circuit (C; C'; 70) has counting or timing circuits for the periodic suppression of an optionally selectable whole number of sequential half waves of the alternating current, with the result that with the selected suppression stage, only every second, third, fourth, ... nth half wave is maintained, unchanged in magnitude and duration, and in that a number of phase angle circuits (D; D'; 70) corresponding to the number of suppression stages present is provided, each of which produces a phase angle of a specific magnitude and is permanently allocated to one of the suppression stages.

2. Spray gun according to claim 1, characterised in that up to 12 sequential half waves of the alternating current may be suppressed.

3. Spray gun according to claim 1 or 2, characterised in that 4–8 suppression stages are provided.

4. Spray gun according to one of claims 1–3, characterised in that the suppression circuit is a counting circuit (C) with an electronic counting module (16) which has a plurality of outputs (Q1 ... Q9) and the phase angle circuits (D) have a register consisting of fixed resistances (21, 22a ... 22h), the counting module (16) and the resistance register (21, 22) being jointly adjustable by means of a bipolar switch (23).

5. Spray gun according to one of claims 1–3, characterised in that the suppression circuit is a timing circuit (C') with an adjustable potentiometer (52) and in that the phase angle circuits (D') consist of an electronic counting module (62) and a resistance register (59, 60a...60h), the counting module (62) effecting automatic resistance allocation to the suppression stage set on the potentiometer (52).

6. Spray gun according to one of claims 1–3, characterised in that the suppression circuit is a timing circuit (C') with an adjustable potentiometer and in that the potentiometer consists of a step switch with fixed resistances and the second plane of the switch serves to adjust the phase angle.

7. Spray gun according to one of claims 1–3, characterised in that the suppression circuit is a counting circuit (C) and in that the phase angle circuits (D') consist of an electronic counting module (62) and a resistance register (59, 60a...60h).

8. Spray gun according to claim 7, characterised in that the same counting module is used for the suppression circuit (C) and the phase angle circuits (D').

9. Spray gun according to one of claims 4–8, characterised in that a commercially available IC-module is used as the counting module (16; 62).

10. Spray gun according to one of claims 1–3, characterised in that the suppression circuit and the phase angle circuits are integrated in a single special IC-module (70).

11. Spray gun according to claim 10, characterised in that the IC-module (70) is switchable by means of pushbutton switches (76, 77), one of which raises the suppression stage and another which lowers the suppression stage.

12. Spray gun according to claim 6, characterised in that the IC-module (70) is switchable by means of a pushbutton switch (76) which rotationally lowers and raises the suppression stages such that switching takes place respectively from a higher suppression stage to the next stage down and from the lowest stage to the highest stage.

13. Spray gun according to claim 11 and 12, characterised by a display device (78), preferably an LCD-display device, connected to the IC-module (70), which displays the set suppression stage.

14. Spray gun according to one of claims 4–13 with a power supply pushbutton switch, characterised in that a high impedance resistance (80) is connected in parallel with the power supply pushbutton switch (1).

15. Spray gun according to claim 14, characterised in that the suppression stages may be preselected and displayed even when the power supply switch has not yet been pressed.

16. Spray gun according to one of claims 10–15, characterised in that the IC-module (70) is provided with an automatic frequency correction circuit.

17. Spray gun according to one of claims 10–16, characterised in that the IC-module is designed with a high impedance using CMOS technology.

18. Spray gun according to one of claims 1–17, characterised by an adjustment device (111) for the fine tuning of the hydraulic and mechanical elements to the particular suppression stage that has been selected and for additional mechanical quantity control of the discharge of the spray medium.

19. Spray gun according to one of claims 1–18, characterised in that the electrical or electronic circuits or modules are arranged as a modular unit (106) and the display (107) is arranged above the piston pump (103) and the display (107) is covered by a transparent film (109).

20. Spray gun according to claim 19, characterised in that the electrical or electronic modular unit (106), the display (107) and the switch (23) or pushbutton switch (76) are arranged on or on top of a plate (120) which is secured in a frame (108), the frame (108) with the film (109) being inserted fluidtight and removably in the gun housing (100).

**Revendications**

1. Pistolet de pulvérisation sans air avec un piston de pompe et un dispositif d'entraînement se composant d'une bobine et d'un induit vibrant présentant une entrée de raccordement à un réseau de courant alternatif, une sortie menant à la bobine d'induit vibrant, un circuit de suppression connectable au choix pour diviser par deux la fréquence du courant alternatif du réseau de courant alternatif par suppression périodique de chaque deuxième demi-onde et des circuits de découpage de phase, caractérisé en ce que le circuit de suppression (C; C'; 70) présente des circuits de comptage ou de temporisation pour supprimer périodiquement un nombre entier sélectionnable au choix de demi-ondes successives du courant alternatif, de façon que pour le niveau de suppression choisi, seule chaque deuxième, troisième, quatrième, ... nième demi-onde soit conservée, inchangée il est vrai en valeur et en durée, et en ce qu'il est prévu un nombre de circuits de découpage de phase (D; D'; 70) correspondant au nombre des niveaux de suppression existants, circuits dont chacun provoque un découpage de phase d'une certaine importance et est affecté de manière fixe à l'un des niveaux de suppression.

2. Pistolet de pulvérisation selon la revendication 1, caractérisé en ce que l'on peut supprimer jusqu'à 12 demi-ondes successives du courant alternatif.

3. Pistolet de pulvérisation selon la revendication 1 ou 2, caractérisé en ce que sont prévus 4 à 8 niveaux de suppression.

4. Pistolet de pulvérisation selon l'une des revendications 1 à 3, caractérisé en ce que le circuit de suppression est un circuit de comptage (C) avec une unité de comptage (16) électronique présentant une pluralité de sorties (Q1...Q9) et les circuits de découpage de phase (D) présentant un registre se composant de résistances fixes (21, 22a...22h), l'unité de comptage (16) et le registre de résistance (21, 22) étant réglables en commun au moyen d'un interrupteur bipolaire (23).

5. Pistolet de pulvérisation selon l'une des revendications 1 à 3, caractérisé en ce que le circuit de suppression est un circuit de temporisation (C') à potentiomètre (25) réglable et en ce que les circuits de découpage de phase (D') se composent d'une unité de comptage électronique (62) et d'un registre de résistances (59, 60a...60h), l'unité de comptage (62) effectuant une affectation automatique de la résistance au niveau de suppression réglé sur le potentiomètre (52).

6. Pistolet de pulvérisation selon l'une des revendications 1 à 3, caractérisé en ce que le circuit de suppression est un circuit de temporisation (C') à potentiomètre réglable et en ce que le potentiomètre se compose d'un commutateur à plots à résistances fixes et que le deuxième plan du commutateur sert au réglage du découpage de phase.

7. Pistolet de pulvérisation selon l'une des revendications 1 à 3, caractérisé en ce que le circuit de suppression est un circuit de comptage (C) et en ce que les circuits de découpage de phase (D') se composent d'une unité de comptage électronique (62) et d'un registre de résistances (59, 60a...60h).

8. Pistolet de pulvérisation selon la revendication 7, caractérisé en ce que la même unité de comptage est utilisée pour le circuit de suppression (C) et les circuits de découpage de phase (D').

9. Pistolet de pulvérisation selon l'une des revendications 4 à 8, caractérisé en ce que l'on utilise une unité IC courante du commerce comme unité de comptage (16; 62).

10. Pistolet de pulvérisation selon l'une des revendications 1 à 3, caractérisé en ce que le circuit de suppression et les circuits de découpage de phase sont intégrés dans une unité IC (70) unique et spéciale.

11. Pistolet de pulvérisation selon la revendication 10, caractérisé en ce que l'unité IC (70) est commutable au moyen d'un bouton-poussoir (76) augmentant le niveau de suppression et d'un bouton-poussoir le diminuant.

12. Pistolet de pulvérisation selon la revendication 6, caractérisé en ce que l'unité IC (70) est commutable au moyen d'un bouton-poussoir (76) abaissant et accroissant les niveaux de suppression selon une permutation circulaire, de sorte que l'on commute chaque fois d'un niveau de suppression supérieur au niveau immédiatement inférieur et du niveau le plus bas au niveau le plus haut.

13. Pistolet de pulvérisation selon la revendication 11 et 12, caractérisé par un dispositif d'affichage (78), de préférence un dispositif d'affichage LCD, indiquant le niveau de suppression réglé et raccordé à l'unité IC (70).

14. Pistolet de pulvérisation selon l'une des revendications 4 à 13, caractérisé en ce qu'une résistance (80) fortement ohmique est branchée en parallèle au bouton-poussoir du réseau (1).

15. Pistolet de pulvérisation selon la revendication 14, caractérisé en ce que les étages de suppression sont présélectionnables et affichables même lorsque le bouton-poussoir de réseau (1) n'a pas encore été pressé.

16. Pistolet de pulvérisation selon l'une des revendications 10 à 15, caractérisé en ce que l'unité IC (70) est pourvue d'un circuit d'adaptation automatique de fréquence.

17. Pistolet de pulvérisation selon l'une des revendications 10 à 16, caractérisé en ce que l'unité IC est construite dans la technologie CMOS.

18. Pistolet de pulvérisation selon l'une des revendications 1 à 17, caractérisé par un dispositif de réglage (111) pour obtenir une détermination fine des éléments hydrauliques et mécaniques en fonction de chaque niveau de suppression choisi et produisant une commande supplémentaire mécanique du débit de fluide à pulvériser.

19. Pistolet de pulvérisation selon l'une des revendications 1 à 18, caractérisé en ce que les circuits de commutation électriques, ou électroniques, ou les unités sont disposées sous forme d'unité constructives (105) et que l'affichage (107) est disposé sur la pompe à piston (103) et que l'affichage (107) est recouvert par une feuille (109) transparente.

20. Pistolet de pulvérisation selon la revendication 19, caractérisé en ce que l'unité constructive (106) électrique ou électronique, l'affichage (107) et l'interrupteur (23), ou le bouton-poussoir (76) sont disposés sur une platine (120) fixée dans un cadre (108), introduit de manière étanche aux fluides et interchangeable dans le carter de pistolet (100).

## Fig. 1

EP 0 213 234 B1

A | B | C | D | E | F

Fig. 2

EP 0 213 234 B1

# Fig. 3

## Fig. 3 A

Fig.4

EP 0 213 234 B1